# FASCICULE DE BREVET EUROPEEN

(11) **EP 2 193 082 B1**
(45) Date de publication et mention de la délivrance du brevet: **27.06.2012**
(21) Numéro de dépôt: 08838550.5
(22) Date de dépôt: 19.09.2008
(51) Int. Cl.: B64D 11/00, G06F 13/00

(54) **SYSTEME ET PROCEDE POUR ACCEDER A UN EQUIPEMENT INFORMATIQUE PERSONNEL A BORD D'UN AERONEF, ET AERONEF COMPRENANT UN TEL SYSTEME**
SYSTEM UND VERFAHREN ZUM ZUGRIFF AUF EINEN PC AN BORD EINES FLUGZEUGS UND MIT EINEM SOLCHEN SYSTEM AUSGERÜSTETES FLUGZEUG
SYSTEM AND METHOD FOR ACCESSING A PERSONAL COMPUTER DEVICE ONBOARD AN AIRCRAFT AND AIRCRAFT EQUIPPED WITH SUCH SYSTEM

(30) Priorité: 27.09.2007 FR 0757913
(43) Date de publication de la demande: 09.06.2010
(73) Titulaire: Airbus, 31700 Blagnac (FR)
(72) Inventeur: FRANCOIS, Bruno, F-31880 La Salvetat Saint Gilles (FR); SMITH, Garrett, F-31770 Colomiers (FR)
(74) Mandataire: Le Tourneau, Augustin
(86) Numéro de dépôt international: PCT/FR2008/051688
(87) Numéro de publication internationale: WO 2009/047464

(56) Documents cités:
- WO-A-00/14987
- WO-A-03/067818
- WO-A-2007/093984
- DE-U1- 20 315 554
- FR-A- 2 898 315
- US-A1- 2002 109 647
- US-A1- 2003 233 659
- US-A1- 2007 061 847
- US-A1- 2008 061 609

## Description

L'invention se rapporte au domaine aéronautique et concerne d'une manière générale les systèmes embarqués à destination des passagers tels que les systèmes de divertissement en vol (en anglais *"In-Flight Entertainement [IFE] system*")*.*

Plus particulièrement, l'invention propose un système et un procédé pour accéder à un équipement informatique personnel à bord d'un aéronef. L'invention se rapporte également à un aéronef équipé d'un système selon l'invention.

Les systèmes IFE sont largement répandus dans les aéronefs commerciaux actuels et permettent de déployer des services en vol aux passagers, par exemple un service de films à la demande, un service de radiodiffusion, un service d'informations de vol en temps réel. Un système IFE comprend généralement un ou plusieurs serveurs centraux possédant une intelligence d'exécution des services, un écran d'affichage rabattable fixé à chaque siège faisant face à un passager (siège avant) et une télécommande à chaque siège pour interagir avec le serveur central, ainsi qu'un réseau reliant ces différents équipements. Ces systèmes IFE sont découplés des équipements personnels transportés et utilisés en cabine par les passagers.

Différents systèmes d'information IFE sont présentés dans les demandes de brevet US2003160706, WO2007093327, WO2007093403 et WOO3067818.

Les passagers occupent régulièrement une partie de leurs vols à travailler sur des ordinateurs personnels ou à jouer sur des dispositifs électroniques. En utilisation, ces équipements, nommés par la suite équipements informatiques personnels, sont placés sur la tablette dépliée faisant face au passager.

En classe économique notamment, la configuration de cabine limite de façon importante l'espace entre deux rangées de sièges. Il en résulte que les équipements informatiques personnels peuvent occuper une part non négligeable de cet espace, diminuant le confort du passager.

Par exemple, plus le siège avant faisant face au passager est incliné en position allongée, plus un ordinateur portable dont l'écran est ouvert doit être mis dans une position avancée sur la tablette du passager pour que le dossier du siège avant ne gêne pas l'ouverture de l'écran. Dans ce cas, l'ordinateur est trop près du passager pour en permettre une utilisation confortable.

C'est par exemple le cas dans le système de la publication WO 00/14987 qui propose un système de communication entre un avion et une station de base terrestre.

Dans ce système, les utilisateurs peuvent connecter leur ordinateur portable ou PDA directement sur une borne prévue à cet effet au niveau de leur siège pour obtenir un accès à la station de base. Toutefois, l'utilisateur interagit directement sur son ordinateur portable positionné sur sa tablette.

Il existe ainsi un besoin d'améliorer le confort des passagers pour accéder aux données de leurs équipements informatiques personnels ou contrôler ces équipements informatiques personnels.

A cet effet, notamment, l'invention vise un système pour accéder à un équipement informatique personnel à bord d'un aéronef, le système comprenant un réseau embarqué auquel est connectée au moins une interface au niveau d'un siège de passager,
le système comprenant des moyens de connexion agencés pour connecter ledit équipement informatique personnel audit réseau embarqué, et
le système étant agencé de sorte que ladite interface et ledit équipement informatique personnel interagissent (ensemble) par la transmission de données sur ledit réseau embarqué.

La présente invention repose ainsi, notamment, sur l'interfaçage de ces équipements informatiques personnels avec un réseau du système embarqué déjà existant dans la cabine d'aéronef et par l'utilisation d'Interfaces déjà existantes au niveau des sièges, telles qu'un écran, pour interagir à distance avec ces équipements personnels.

Ainsi, ces équipements ne sont plus nécessairement sur la tablette ou dans l'espace restreint de vie du passager. Le confort du passager est ainsi amélioré.

Le réseau embarqué, les interfaces disponibles et d'éventuels périphériques et équipements réseau associés assurent un accès et une utilisation classique de l'équipement personnel interfacé. Le passager peut ainsi utiliser des propres fichiers sauvegardés sur son ordinateur portable. Le passager conserve ainsi l'environnement traditionnel de son ordinateur portable/équipement personnel.

Le réseau embarqué peut à titre d'exemple être le réseau d'un système embarqué de fourniture de services en vol aux passagers, par exemple un système IFE. L'invention peut ainsi être déployée à moindre coût en utilisant les systèmes largement répandus et installés dans les cabines d'aéronef actuelles.

L'interface du système embarqué au niveau du siège passager est, par exemple, un écran de visualisation, un écran tactile ou une commande IFE individuelle. La commande IFE individuelle s'entend comme l'ensemble des touches placées au niveau d'un siège de passager, qui permettent à ce passager d'interagir avec le système IFE embarqué, par exemple pour la sélection de films.

L'accès aux données de l'équipement informatique personnel comprend aussi bien la visualisation de données sur l'interface que la manipulation de telles données par l'envoi de commandes ou instructions générées par le passager au travers de l'interface. Selon l'invention, cet accès est réalisé par l'utilisation du réseau embarqué, par exemple par transmission, sur ce réseau, de données d'affichage vers l'interface de visualisation ou de données d'interaction générées par l'interface vers l'équipement personnel connecté. La transmission de données peut, à titre d'exemple, est réalisée selon le protocole IP ("*Internet Protocol*").

Dans un mode de réalisation, ladite au moins une interface comprend un écran de visualisation. Puisque les systèmes embarqués existants dans les aéronefs sont déjà munis d'écrans de visualisation individuels, type LCD ("*Liquid Crystal Display*"), on utilise, selon l'invention, ces interfaces. Le nombre de périphériques supplémentaires pour le fonctionnement de l'équipement personnel peut ainsi être diminué.

L'utilisation des écrans de visualisation déjà existants offre également un avantage ergonomique au passager. En effet, l'écran est placé devant le passager, à la hauteur des yeux. Au contraire, l'ordinateur portable posé sur une tablette nécessite que le passager baisse les yeux.

Afin d'offrir des capacités d'interaction avec l'équipement informatique personnel, il est prévu que le système comprend au moins un périphérique de saisie au niveau dudit siège de passager, le périphérique étant connecté audit réseau embarqué et étant agencé pour interagir avec ledit équipement informatique personnel par la transmission de données sur ledit réseau embarqué.

Particulièrement, ledit périphérique de saisie comprend un projecteur/capteur projetant un clavier virtuel sur une surface plane. Un projecteur/capteur de clavier virtuel est l'association, éventuellement au sein d'un même dispositif, d'un moyen de projection d'une image de clavier de touches sur une zone et d'un moyen capteur apte à déterminer l'interaction d'un utilisateur avec l'une quelconque des touches projetées. Cette solution est compacte, peu envahissante et donc favorable à un confort accru du passager. En outre, elle offre un confort ergonomique supplémentaire au passager du fait que l'épaisseur de l'ordinateur portable n'est plus présente. Le clavier est donc mieux positionné et ne nécessite plus de « casser » les poignets lors de la frappe.

En particulier, ledit projecteur/capteur est monté sur le dossier du siège immédiatement devant ledit siège du passager dans le sens longitudinal de l'assise. Dans les configurations traditionnelles de cabines d'aéronef, ledit dossier correspond à la face arrière du dossier faisant face au passager. Cette intégration du projecteur/capteur est avantageuse en ce que le clavier virtuel est présenté face au passager. Aucun(e) déploiement ou installation préalable du projecteur/capteur n'est ainsi nécessaire.

Notamment, ladite surface plane comprend une tablette montée mobile sur ledit dossier de siège, ce qui permet une utilisation optimale des équipements (ici la tablette) déjà existants. La tablette est mobile selon un axe horizontal de sorte à fournir, au passager, une surface sensiblement horizontale.

Selon un mode de réalisation de l'invention, il est également prévu que le système comprend des moyens de type pointeur au niveau dudit siège de passager connectés audit réseau embarqué et agencés pour interagir avec ledit équipement informatique personnel par la transmission de données sur ledit réseau embarqué. Ces moyens pointeurs, par exemple une souris informatique, sont complémentaires du périphérique de saisie et contribuent à fournir un environnement informatique traditionnel aux passagers.

Plus particulièrement, ladite interface comprend lesdits moyens de type pointeur. Notamment, ladite interface est un écran tactile dont les moyens pointeur sont actionnés par l'activation de la propriété tactile de l'écran. Ladite interface peut également être une commande individuelle associée à un système de fourniture de services supportant ledit réseau embarqué.

Dans ces configurations, l'on réutilise avantageusement les équipements déjà déployés dans l'aéronef pour le système/réseau embarqué, par exemple de type IFE ("*In-Flight Entertainement system*").

Selon une variante ou optionnellement en complément, lesdits moyens de type pointeur comprennent un équipement périphérique pointeur, par exemple une souris informatique traditionnelle avec ou sans fil, connecté audit réseau embarqué au niveau dudit siège de passager. La connexion peut être réalisée au travers d'un cordon USB ("*Universal Serial Bus*") et d'une prise USB correspondante pourvoyant les sièges de passager.

Dans un mode de réalisation, le système comprend un logement agencé pour accueillir et fournir audit équipement informatique personnel ladite connexion au réseau embarqué.

Le logement ad hoc permet de libérer le passager de la présence de son équipement informatique pendant tout le vol tout en assurant une connexion au réseau embarqué et donc un accès, pour le passager, à ses données au travers de l'interface.

L'ordinateur portable placé dans le logement n'est également plus soumis aux risques de dommages liés à des mouvements imprévisibles du siège faisant face auquel est lié la tablette supportant l'ordinateur.

En particulier, ledit logement comprend des moyens de connexion électrique pour alimenter ledit équipement informatique personnel en position d'accueil, ce qui évite que l'équipement ou ordinateur personnel ne s'éteigne pendant le vol à cause d'une batterie vide.

Il est également prévu que ledit logement est positionné sous ledit siège de passager. L'espace de vie du passager n'est ainsi pas entamé et l'accès à l'équipement personnel dans le logement reste aisé et rapide.

En alternative, le logement peut, par exemple, être un monument dédié placé dans la cabine de l'aéronef. Le monument dédié est un rangement accueillant les équipements personnels de n'importe quel passager.

Selon un mode de réalisation, ledit réseau embarqué comprend un réseau sans-fil, par exemple Wifi, et lesdits moyens de connexion comprennent une borne de connexion sans-fil audit réseau sans-fil. Aucune manipulation de branchement physique n'est nécessaire. La connexion de l'équipement personnel au réseau en est ainsi facilitée.

Selon une alternative, ledit réseau embarqué comprend un réseau filaire Ethernet et lesdits moyens de connexion comprennent un connecteur Ethernet. Le connecteur est alors placé dans le logement approprié pour recevoir les équipements personnels.

Dans un mode de réalisation, le système comprend en outre un système de communication embarqué et connecté audit réseau embarqué, ledit système de communication étant agencé pour se connecté à un réseau de communication extérieur audit aéronef. Un tel système de communication embarqué vers un réseau externe peut être, à titre d'exemple, un système SATCOM (communication par satellite). Les deux réseaux sont reliés par une passerelle réseau. Le passager peut ainsi accéder à distance à des fichiers sauvegardés sur un ordinateur au sol.

Le système peut comprendre, au niveau dudit siège de passager, un port agencé pour connecter un périphérique de stockage au réseau embarqué. Il est ainsi aisé pour le passager de connecter directement au système un équipement de stockage, par exemple un disque dur portable ou une clé USB, et d'accéder aux données stockées dessus. L'équipement de stockage et le port de connexion peuvent être selon la norme USB.

Le système peut comprendre une imprimante mise en réseau sur ledit réseau embarqué à l'intérieur de l'aéronef, offrant au passager un environnement informatique complet. Le passager peut ainsi effectuer des impressions depuis son siège.

L'invention a également trait à un procédé pour accéder à un équipement informatique personnel à bord d'un aéronef comprenant un réseau embarqué auquel est connectée au moins une interface au niveau d'un siège de passager, le procédé comprenant une étape de connexion dudit équipement informatique personnel audit réseau embarqué, et une étape d'interaction entre ladite interface et ledit équipement informatique personnel par la transmission de données sur ledit réseau embarqué, de sorte à permettre au passager l'accès auxdites données à travers l'interface.

De façon optionnelle, le procédé peut comprendre des étapes se rapportant aux caractéristiques de système présentées ci-dessus.

L'invention concerne également un aéronef comprenant un tel système pour accéder à un équipement informatique personnel à bord d'un aéronef.

Un avantage de l'invention est de libérer de la place pour le passager. On évite ainsi l'encombrement de la tablette lorsque, par exemple, le plateau repas est servi.

L'invention s'applique particulièrement bien aux classes "économiques" et "économique améliorée", mais peut également être utilisée dans toutes les classes ainsi que des espaces cabines particuliers. Une utilisation pour l'équipage est également envisagée.

Les caractéristiques et avantages de la présente invention apparaîtront plus clairement à la lecture d'un mode préféré de réalisation illustré par les dessins joints, dans lesquels :
- la **figure 1** est une vue d'ensemble du système selon l'invention ;
- les **figures 2a** à **2d** représentent des alternatives de réalisation de la présente invention ;
- les **figures 3** et **4** illustrent l'amélioration du confort des passagers par l'utilisation de la présente invention ;
- les **figures 5a** et **5b** illustrent le déploiement du système selon l'invention au niveau d'une cabine d'aéronef; et
- les **figures 6a** et **6b** illustrent le déploiement du système selon l'invention au niveau d'un siège passager.

Selon un mode de réalisation choisi, un système de divertissement en vol 1, également appelé système IFE, équipe une cabine d'aéronef. Le système IFE 1 comprend un système central 10 regroupant un ou plusieurs serveurs, ci-après dénommé serveur central, qui comprend des ressources matérielles et logicielles pour diffuser des services, par exemple de vidéo à la demande, de musique, de jeux, d'informations de vol, à des écrans LCD 11 équipant les dossiers des sièges Si de passager.

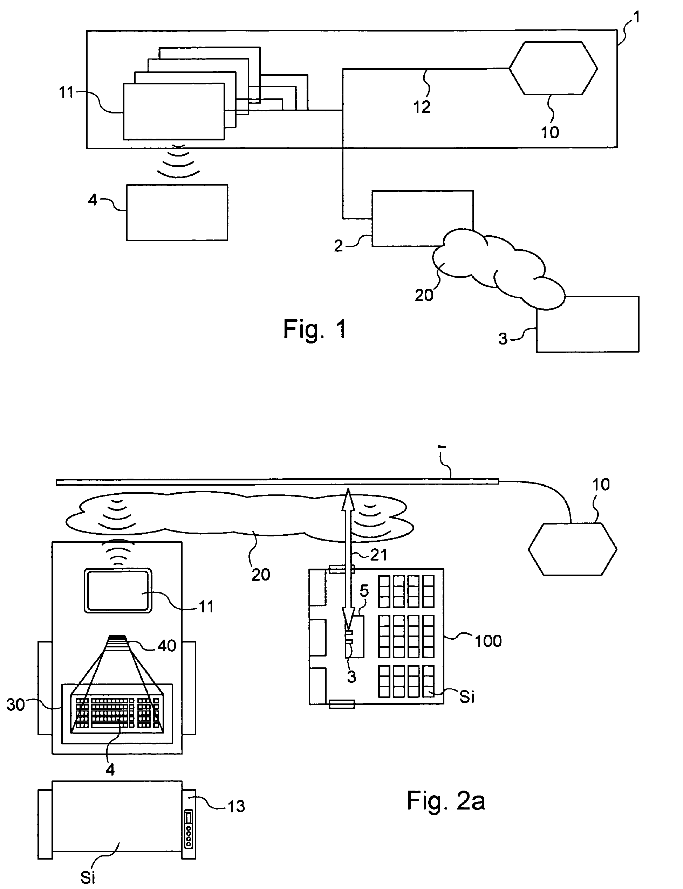

D'autres terminaux individuels accessibles au niveau des sièges de passager peuvent être également prévus, comme par exemple des commandes individuelles IFE, également nommées PCU ("*Passenger Control Unit*") 13 (non représentées sur la **figure 1**) qui permettent la navigation et la sélection dans les menus proposés par le serveur central 10 et affichés sur l'écran individuel 11.

Les écrans 11 et les éventuelles commandes individuelles 13 sont connectées au réseau 12 par l'intermédiaire de boîtiers IFE 54 spécialisés installés dans les sièges de passagers tels que connus de l'homme du métier.

Le système IFE 1 déployé dans l'aéronef se compose d'un réseau Ethernet 12 auquel est relié l'ensemble des équipements serveur 10 et terminaux 11.

Pour la mise en oeuvre de l'invention, le système IFE 1 est muni d'un moyen de connexion 2 agencé pour connecter un équipement personnel 3 au réseau 12. Comme décrit par la suite en référence aux **figures 2a** à **2d**, le moyen de connexion peut prendre différentes formes, notamment un simple câble Ethernet ou une borne de connexion sans fil, par exemple du type répondant à la norme IEEE 802.11, couramment dénommé "Wifi".

En particulier, la borne de connexion 2 est de préférence une borne Wifi sous forme d'une antenne câblée de type fuyant ("Leaky line" selon la terminologie anglo-saxonne). La *leaky line* est notamment constituée d'un ou plusieurs câbles avec des zones de fuites sous la forme de câbles d'antennes blindés auxquels le blindage a été retiré sur par exemple 10 cm tous les 1 mètre environ.

En alternative, une borne d'accès réseau sans fil classique ("*Cabin Wireless LAN Unit*" ou CWLU selon la terminologie anglo-saxonne) peut être utilisée comme borne de connexion 2.

L'équipement informatique personnel 3 recouvre à la fois les ordinateurs portables, assistants personnels, téléphones portables, consoles de jeux et tout autre dispositif électronique muni de moyens de connexion avec un réseau de communication 12. Pour la suite, on se réfère à un ordinateur portable 3 muni d'une connexion Wifi au réseau IFE 12 au travers de la borne d'accès 2.

Le serveur 10 assure la connectivité de l'ordinateur 3 au réseau 12 et le transfert de données depuis ou vers cet ordinateur.

Un clavier de saisie 4 est fourni au passager.

Le clavier 4 peut être un clavier matériel connecté au réseau 12 par une interface USB ou PS/2 ("*Personal System*/2").

De préférence, le clavier 4 est un clavier laser virtuel projeté sur la tablette dépliée équipant le dossier du siège faisant face au passager. Le clavier 4 est formé à partir d'un projecteur laser piloté par des moyens informatiques reliés au réseau 12 et d'un capteur apte à détecter l'interaction du passager avec le clavier virtuel projeté au niveau de la tablette. Le module projecteur/capteur 40 est relié au système IFE 1 par l'intermédiaire d'une connexion USB avec le boîtier IFE installé dans le siège du passager.

L'ensemble projecteur/capteur 40 peut être intégré au bloc formant l'écran LCD monté mobile selon un axe horizontal sur le dossier du siège.

En alternative, le bloc 40 peut constituer un module indépendant sur le dossier du siège.

Eventuellement, le bloc 40 peut être intégré dans la partie appui-tête.

En alternative, le bloc 40 est intégré dans le système de tablette.

Pour fournir les outils traditionnels d'un environnement informatique, l'écran LCD 11 est, par exemple, tactile et fournit ainsi une fonction pointeur-souris informatique, appelé aussi "*Smart Video Display Unit*" (SVDU).

En variante, une souris informatique matérielle peut être prévue, par exemple sous forme :
- de stylo souris ou souris standard connecté au réseau 12 par un port USB pourvu sur le siège de passager,
- de bloc à effleurement ("*touch pad*") positionné sur un accoudoir du passager et connecté au réseau 12 par liaison filaire USB, ou
- d'un bloc digital de la commande individuelle IFE 13 déjà intégrée au système IFE 1.

Des mécanismes de commande à distance d'équipements et/ou logiciels sur réseau informatique sont mis en oeuvre par le serveur 10 ou un deuxième serveur équivalent sur le réseau.

Dans un mode de réalisation où l'exécution des programmes est réalisée sur l'ordinateur 3, des données d'affichage sont générées par l'ordinateur 3 vers la borne Wifi 2 qui transmet les données sur le réseau 12. Les moyens du serveur 10 permettent l'affichage de ces données sur l'écran 11 du passager.

Lorsque l'utilisateur génère une commande au travers de l'activation soit d'une touche du clavier 4 soit du dispositif de pointage, un message de commande est généré puis transmis sur le réseau à destination de l'ordinateur 3. Ce dernier, à réception du message, exécute la commande et transmet des données de mise à jour de l'affichage à l'écran 11 concerné.

Dans cette réalisation, il est prévu l'installation d'un logiciel ad hoc sur l'ordinateur personnel 3 par l'utilisateur avant le vol afin de favoriser la reconnaissance de l'adresse IP de l'ordinateur 3 par le système IFE 1 et d'ainsi lui autoriser l'accès au réseau 12 au travers d'un éventuel pare-feu lors du vol. Par ce logiciel et un logiciel correspondant proposé par le système IFE 1, le passager crée son propre réseau privé VPN pour lequel le système IFE 1 et son réseau embarqué 12 n'apportent qu'une fonction de transfert de données (d'affichage et de commandes). L'exécution des applications est effectuée sur l'ordinateur personnel 3 ce qui est avantageux lorsque l'on remarque que les ordinateurs 3 des passagers sont généralement plus performants que les serveurs 10 du système IFE 1.

Le passager exécute le logiciel correspondant proposé par le système IFE et s'authentifie pour créer son VPN avec le logiciel ad hoc présent sur l'ordinateur. Cette configuration peut être du type client (logiciel sur le système IFE) et serveur (logiciel ad hoc sur l'ordinateur 3).

L'authentification peut être réalisée grâce à une clé USB spécifique dans un mécanisme de connexion à distance, grâce à un code personnel ou encore grâce à un jeton ("*token*" selon la terminologie anglo-saxonne)

Dans un mode de réalisation où le passager utilise des logiciels fournis par le serveur 10, l'ordinateur 3 apparaît comme un disque réseau depuis lequel le passager peut charger des fichiers personnels pour les afficher sur l'écran 11.

Pour permettre l'affichage des données de l'ordinateur 3 sur l'écran 11 du passager propriétaire de cet ordinateur 3 une association entre l'ordinateur et le siège passager correspondant est effectuée.

Cette association peut être effectuée manuellement lors de la connexion de l'ordinateur 3 au réseau Wifi 20 de la borne 2, par exemple en indiquant dans une interface informatique ad hoc le numéro de siège utilisé.

En alternative, un connecteur physique associé au siège du passager peut être disponible pour relier son ordinateur au réseau. Ce connecteur est paramétré au niveau du réseau avec une adresse associée au siège correspondant.

Une première configuration du système selon l'invention est illustrée par la **figure 2a****.**

L'ordinateur 3 est déposé dans un compartiment 5 de la cabine 100 d'aéronef, le compartiment étant dédié à la réception des équipements personnels électroniques.

Le compartiment est par exemple un logement prévu sous le siège du passager, un espace de rangement des bagages général, notamment un compartiment en hauteur.

Le compartiment comprend des prises de courant électriques pour alimenter l'ordinateur, par exemple des prises traditionnelles requerrant l'utilisation d'un cordon d'alimentation, ou des connecteurs USB qui permettent de fournir de l'énergie depuis un réseau ou système informatique.

Il peut également être prévu des moyens de ventilation du compartiment, notamment lorsque ce dernier est commun à plusieurs ordinateurs de passagers.

Dans ce mode de réalisation, l'ordinateur 3 est relié au réseau 12 de l'IFE 1 au travers du réseau Wifi 20 formé par l'antenne *leaky Line.* La liaison sans fil (flèche 21) assure une connexion bidirectionnelle de l'ordinateur 3 au réseau 12.

Un clavier laser virtuel 40 tel que décrit précédemment est prévu sur le dossier du siège avant.

Le même réseau sans fil 20 permet de connecter l'écran LCD 11 et l'équipement de clavier 40 au réseau IFE.

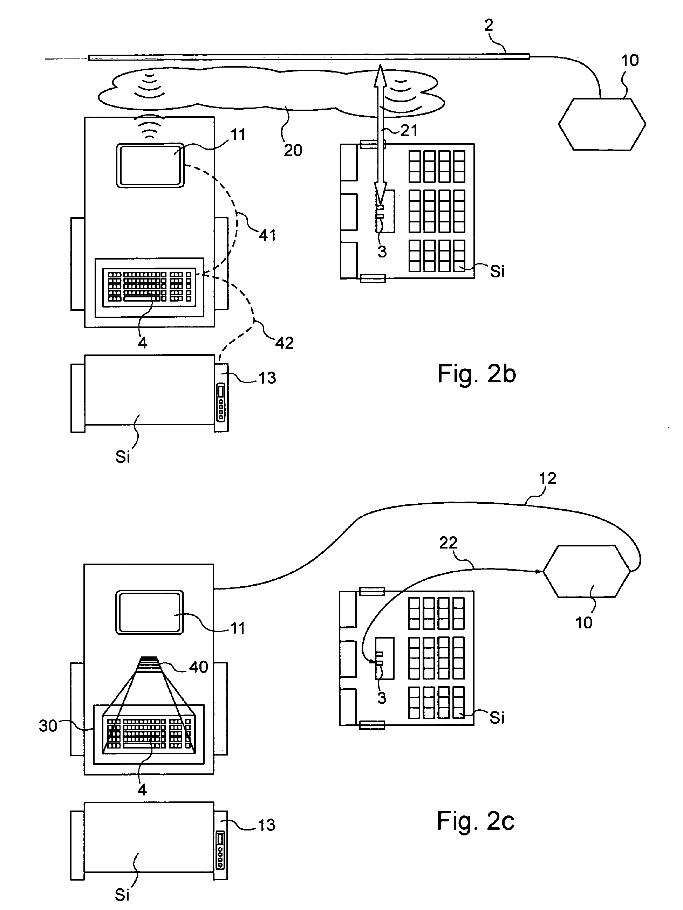

Dans la deuxième configuration proposée en référence à la **figure 2b****,** l'ordinateur 3 est toujours connecté au réseau 12 via la borne 2 assurant une communication bidirectionnelle (flèche).

Un clavier matériel 4 amovible est prévu au niveau du passager. La connexion du clavier 4 au réseau 12 est prévu, par exemple, soit par une liaison physique 41 vers un port USB prévue avec l'écran LCD 11, soit par une liaison physique 42 également USB prévue avec l'unité de commande PCU 13 individuelle du passager.

Dans la configuration de la **figure 2c**, une liaison filaire 22, type Ethernet, est utilisée pour connecter l'ordinateur 3 au système IFE 1. Le réseau IFE 12 est également de type filaire auquel sont connectés les écrans LCD 11.

Le clavier virtuel 4 est du même type que celui de la **figure 2a****.**

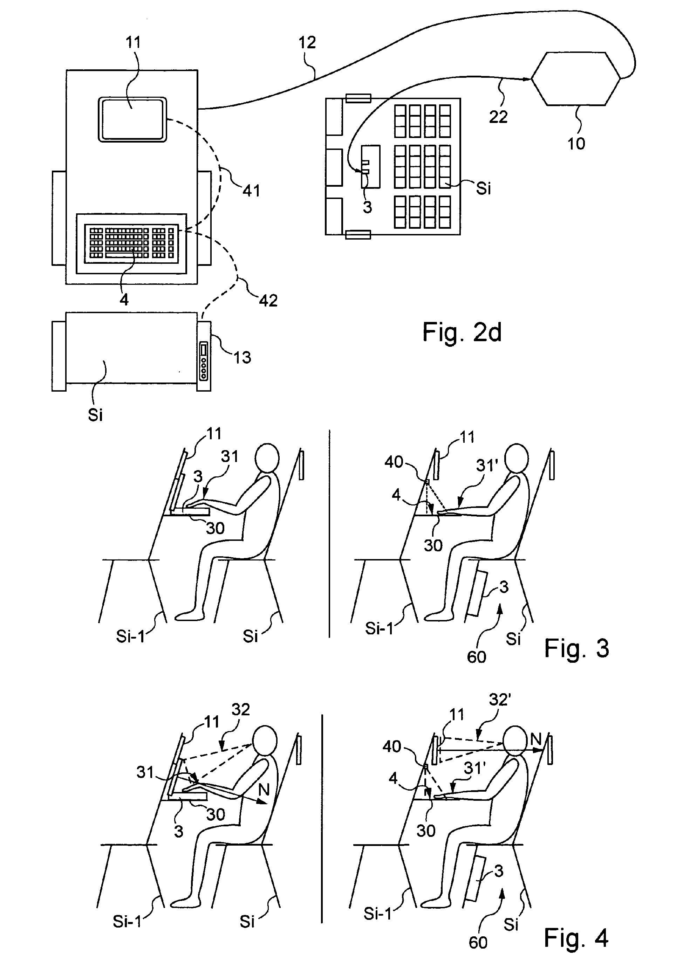

La configuration de la **figure 2d** regroupe un réseau filaire du type celui de la **figure 2c** pour connecter l'ordinateur 3 au réseau IFE 12, et un clavier matériel 4 similaire à celui de la configuration de la **figure 2b**.

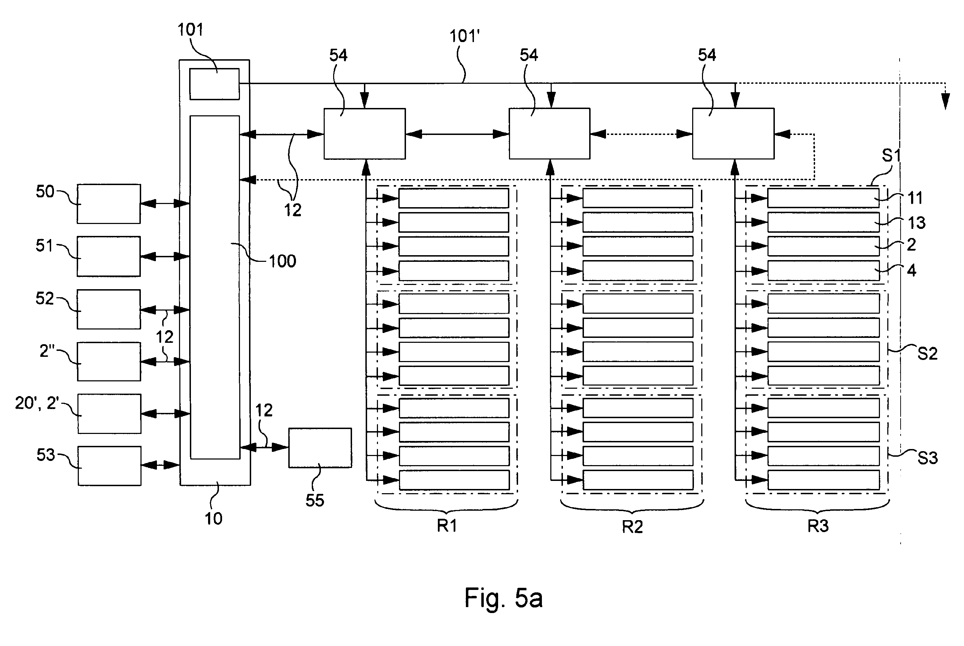

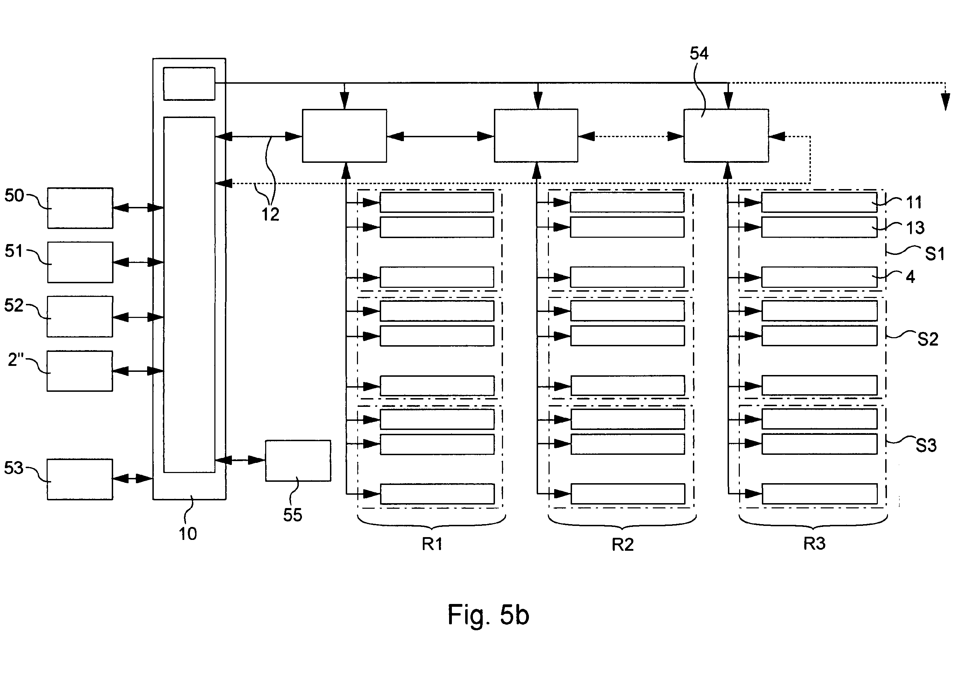

Plus en détail, les **figures 5a** et **5b** représentent l'architecture système de la présente invention au niveau de trois rangées R1-R3 de trois sièges S1-S3, selon deux réalisations :
- en **figure 5a**, une réalisation « mixte » mêlant connexion Ethernet et connexion sans fil ;
- en **figure 5b**, une réalisation « simple » reposant uniquement sur une connexion Ethernet.

Dans la réalisation « mixte », le système central IFE 10 comprend un serveur principal Ethernet 100 et une source d'alimentation 101 alimentant les différents équipements qui lui sont connectés par une ligne d'alimentation 101'.

Le serveur principal Ethernet 100 présente des moyens pour permettre la connectivité entre les différents équipements du réseau Ethernet 12.

Divers équipements fournissant des services de divertissements ou à usage de l'équipage sont connectés au serveur IFE 10 par réseau Ethernet : serveur audio/vidéo à la demande 50 ; point d'entrée 51, généralement destiné à recevoir un microphone, pour l'équipage ; interface d'urgence 51, par exemple en cas de décompression pour diffuser un message sur l'ensemble des interfaces au niveau des sièges de passager ; système SATCOM 53 pour une connexion avec un réseau externe à l'aéronef.

Le serveur IFE 10 diffuse les services sur le réseau Ethernet IFE 12 à destination des boîtiers IFE de jonction des sièges 54.

Le boîtier IFE 54 peut être dédié et connecté à un unique siège Si ou à une rangée Ri comme illustré sur la **figure 5a**.

Au niveau de chaque siège, le boîtier IFE 54 assure l'alimentation électrique et la connexion avec le réseau IFE 12 à l'ensemble des équipements suivants qui lui sont connectés : l'écran LCD individuel 11 d'un type décrit précédemment en référence aux **figures 1** et **2**, l'unité individuelle PCU 13, un clavier 4 d'un type décrit précédemment en référence aux **figures 1** et **2**, et une antenne sans fil individuelle 2, type Wifi.

L'antenne sans fil 2 peut être de faible portée. La connexion au réseau 12 depuis cette antenne 2 n'est ainsi possible que pour un équipement personnel 3 uniquement détenu par le passager du siège, par exemple au sein d'un logement prévu à cet effet sous le siège et hébergeant l'antenne 2. En plaçant l'ordinateur personnel 3 dans un tel logement, l'on évite ainsi les risques de l'abîmer lorsque le siège de devant incline son dossier.

Dans ce cas, des données d'identification physique de cette antenne 2 sont associées au siège du passager. Lorsqu'un équipement personnel 3 est connecté par cette antenne, une association automatique est effectuée par le serveur IFE 10 sur la base des données d'identification de l'antenne 2 au niveau du siège du passager. Les périphériques du siège passager sont ainsi associés à l'équipement personnel 3 connecté de sorte à permettre un affichage efficace sur le bon écran 11 et une interprétation correcte des interactions au niveau des périphériques du siège, clavier ou souris par exemple.

L'unité individuelle PCU 13 comprend les fonctions traditionnelles d'une commande individuelle IFE et des ports informatiques complémentaires auxquels peuvent être raccordés des périphériques, par exemple une souris, un clavier, un disque dur externe, une clé USB.

Les ports informatiques utilisés sont conformes à des normes, par exemple USB, Ethernet RJ-45, « *firewire* » IEE1394, PS/2.

Le système SATCOM 53 est interfacé avec le réseau IFE 12 de façon traditionnelle, notamment il comprend des fonctions de passerelle réseau. Il permet ainsi, aux passagers depuis leurs sièges dans l'aéronef, de consulter et travailler sur des fichiers sauvegardés sur des ordinateurs localisé au bureau et/ou à leurs domiciles.

La configuration « mixte » de la **figure 5a** comprend également une imprimante 55 connectée au réseau Ethernet 12. Cette (ou ces) imprimante 55a une configuration d'imprimante réseau classique, ce qui permet d'effectuer des travaux d'impression depuis chacun des sièges au travers de commandes classiques formulées sur les interfaces 11 ou périphériques clavier et/ou souris, par exemple.

Une antenne Wifi 2' de type *leaky Line* est reliée au serveur IFE 10 et propose un réseau sans fil WLAN 20' global (ou CWL - "*Cabin Wireless LAN*" selon la terminologie anglo-saxonne) pour l'ensemble de la cabine de l'aéronef.

Un équipement personnel 3 peut être connecté au système IFE 10 et au réseau IFE 12 au travers de ce réseau WLAN global 20', moyennant quoi une procédure d'association de l'équipement 3 avec un siège passager doit être effectuée de façon manuelle.

Une station d'accueil 2" d'ordinateurs portables 3 est également prévue dans la cabine de l'aéronef. Cette station d'accueil fournit des connecteurs électriques d'alimentation et de connexion au réseau IFE 12. La station d'accueil 2" est reliée au réseau IFE par l'intermédiaire d'une connectique filaire Ethernet.

On observe ainsi que les passagers peuvent connecter leurs équipements personnels 3 de trois manières différentes :
- connexion par un réseau Wifi 20 local à chaque siège, par exemple dans un logement dédié sous le siège,
- connexion par un réseau Wifi 20' global à l'aéronef, ou
- connexion filaire depuis une station d'accueil 2".

La réalisation « simple » de la **figure 5b** s'appuie sur une infrastructure de réseau similaire à celle de la réalisation « mixte », dans laquelle aucun réseau sans fil n'est présent pour connecter les équipements personnels 3. Dès lors, la connexion de ces derniers 3 au réseau IFE 12 est uniquement réalisée par l'intermédiaire de la station d'accueil 2".

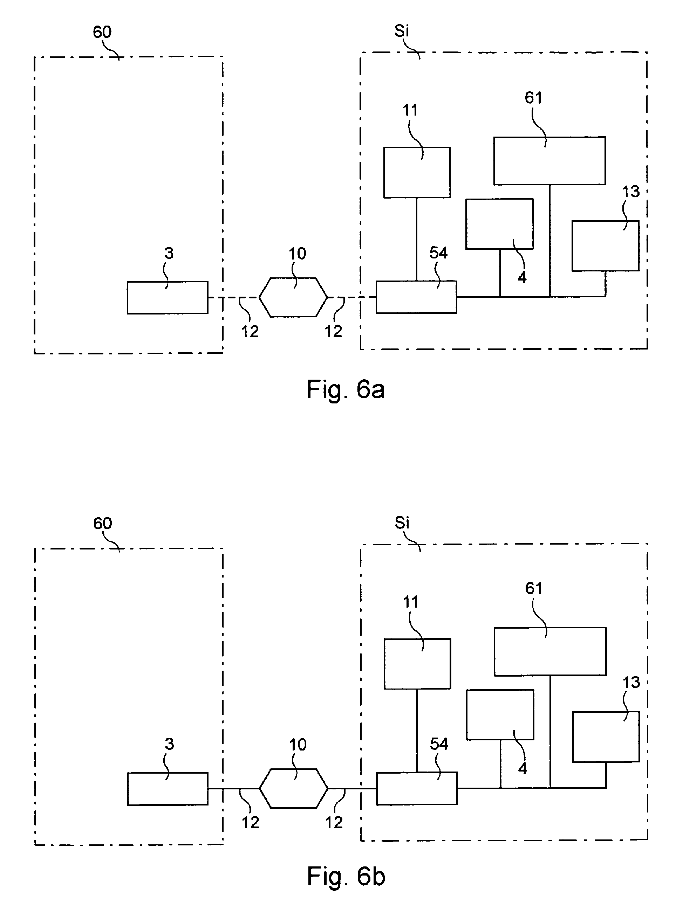

Les **figures 6a** et **6b** décrivent le système au niveau d'un siège Si de passager.

Dans la configuration de la **figure 6a**, l'ordinateur personnel 3 est stocké dans un logement 60 ad hoc et connecté sur le réseau IFE 12 sans fil.

Le serveur central IFE 10 est connecté à ce réseau sans fil IFE 12 pour contrôler les différents équipements du réseau, notamment les périphériques et interfaces au niveau du siège Si de passager.

L'écran d'affichage 11, un clavier matériel ou virtuel 4, une unité de commande individuelle 13 et des ports de connexion individuels 61, par exemple de type USB, IEEE1394, RS/2, RJ-45, sont connectés au réseau 12 par l'intermédiaire d'un boîtier IFE de siège 54.

La liaison entre d'une part l'écran 11, le clavier 4, la commande IFE 13 et les ports de connexion 61 et d'autre part le boîtier 54 est filaire.

Le boîtier IFE 54 est muni d'une interface de connexion sans fil, par exemple une carte réseau Wifi, pour se connecter au réseau 12.

En utilisation, le serveur IFE 10 supporte l'exécution des applications choisies par un passager au travers des interfaces et périphériques. Auquel cas, l'ordinateur portable 3 « apparaît » comme un disque virtuel, au sens informatique, sur le réseau 12.

Des requêtes de données sont émises par le serveur 10 vers l'ordinateur personnel 3 lors de l'exécution des applications. Un message retour renvoie les informations au serveur 10.

Lorsque le passager interagit avec le clavier 4 ou une souris au niveau de son siège, un commande est transmise à destination du serveur 10 et est relayé par le boîtier 54 sur le réseau IFE 12. A réception de la commande, le serveur 10 exécute cette dernière de manière traditionnelle, puis envoie en retour un signal de mise à jour de l'affichage sur l'écran 11 du passager pour restituer l'évolution de l'exécution des applications.

Par l'utilisation de ces différents mécanismes, le passager a accès à ses données personnelles stockées par l'intermédiaire du réseau IFE 12.

Dans la configuration de la **figure 6b**, le système est similaire à l'exception que le réseau 12 est de type filaire Ethernet. Par conséquent, l'ordinateur personnel 3 est connecté au réseau IFE 12 et au serveur IFE 10 par un câble Ethernet et des connecteurs RJ-45, ou une station d'accueil par exemple, et les boîtiers IFE personnels 54 sont connectés par voie filaire Ethernet au serveur IFE 10.

Les mécanismes d'exécution des applications et d'échanges de messages entre les différents équipements demeurent inchangés.

Des avantages de la présente invention ressortent plus clairement à la lumière des **figures 3** et **4**.

Dans ces figures, les vignettes de gauche représentent une situation sans l'invention, et les vignettes de droite représentent une situation similaire en présence de l'invention.

En l'absence de l'invention, le passager du siège Si a disposé son ordinateur portable 3 sur la tablette 30 montée sur le dossier du siège Si-1 faisant face.

D'une part, l'épaisseur de l'ordinateur portable 3 surélève l'avant-bras du passager. Pour atteindre le clavier de l'ordinateur 3, la passager se doit de « casser » son poignet 31. A l'opposé, en présence de l'invention, l'ordinateur 3 est stocké dans un logement ad hoc 60 sous le siège Si du passager. L'avant-bras du passager est au niveau de la tablette 30. Le poignet 31' n'est alors plus cassé. Le passager gagne ainsi en confort ergonomique.

D'autre part, l'écran de l'ordinateur portable 3 se situe dans une position basse juste au dessus de la tablette 30. En outre, l'inclinaison du siège avant Si-1 empêche une ouverture de l'écran de l'ordinateur portable 3 adaptée à une bonne visualisation par le passager, c'est-à-dire un écran dont la normale N passe sensiblement au niveau des yeux du passager. La vision 32 du passager est alors basse et son angle de vue (angle entre la vue du passager et la surface de l'écran) est généralement d'environ 120°.

A l'opposé, grâce à la présente invention, l'écran de l'ordinateur portable 3 est remplacé par l'écran IFE 11 dont la position sur le dossier du siège avant Si-1 est adéquate à une vision confortable pour le passager. L'écran IFE 11 étant mobile sur le dossier du siège Si-1, il peut être placé de sorte que sa normale N passe sensiblement au niveau des yeux du passager (angle de vue = 90°) pour un confort accru du passager. En outre, la position haute de cet écran 11 sur le dossier du siège est favorable à un soulagement des efforts du cou du passager.

## Revendications

1. Système pour accéder à un équipement informatique personnel (3) à bord d'un aéronef, le système comprenant un réseau de communication embarqué (12) offrant l'accès à au moins un service et auquel est connectée au moins une interface utilisateur (4, 11, 13, 61) au niveau d'un siège (Si) de passager, ladite interface permettant au passager d'accéder audit service, et
des moyens de connexion (2, 2') embarqués agencés pour connecter ledit équipement informatique personnel (3) audit réseau embarqué (12), et
le système étant **caractérisé par le fait qu'**il est agencé de sorte que ladite interface (4, 11, 13, 61) et ledit équipement informatique personnel (3) interagissent à distance par la transmission de données sur ledit réseau embarqué (12).

2. Système selon la revendication 1, comprenant au moins un périphérique de saisie (4, 40) au niveau dudit siège (Si) de passager connecté audit réseau embarqué (12) et agencé pour interagir avec ledit équipement informatique personnel (3) par la transmission de données sur ledit réseau embarqué (12).

3. Système selon la revendication précédente, dans lequel ledit périphérique de saisie comprend un projecteur/capteur (40) projetant un clavier virtuel (4) sur une surface plane (30).

4. Système selon l'une quelconque des revendications précédentes, dans lequel ladite interface (4, 11, 13, 61) comprend des moyens de type pointeur connectés audit réseau embarqué (12) et agencés pour interagir avec ledit équipement informatique personnel (3).

5. Système selon l'une quelconque des revendications précédentes, dans lequel ladite au moins une interface (4, 11, 13, 61) comprend un écran de visualisation (11).

6. Système selon l'une quelconque des revendications précédentes, comprenant un logement (60) agencé pour accueillir et fournir audit équipement informatique personnel (3) ladite connexion au réseau embarqué (12).

7. Système selon la revendication précédente, dans lequel ledit logement (60) présente des moyens de connexion électrique apte à alimenter ledit équipement informatique personnel (3) en position d'accueil.

8. Système selon l'une quelconque des revendications précédentes, dans lequel ledit réseau embarqué (12) est un réseau sans-fil et lesdits moyens de connexion (2, 2') comprennent une borne de connexion sans-fil audit réseau sans-fil.

9. Procédé pour accéder à un équipement informatique personnel (3) à bord d'un aéronef comprenant un réseau de communication embarqué (12) offrant l'accès à au moins un service et auquel est connectée au moins une interface utilisateur (4, 11, 13, 61) au niveau d'un siège (Si) de passager, ladite interface permettant au passager d'accéder audit service,
le procédé comprenant une étape de connexion, à l'intérieur dudit aéronef, dudit équipement informatique personnel (3) audit réseau embarqué (12),
le procédé étant **caractérisé par le fait qu'**il comprend une étape d'interaction à distance entre ladite interface (4, 11, 13, 61) et ledit équipement informatique personnel (3) par la transmission de données sur ledit réseau embarqué (12).

10. Aéronef comprenant un système selon l'une quelconque des revendications 1 à 9.

## Claims

1. System for providing access to a personal computer equipment item (3) on board of an aircraft, the system comprising an on-board network (12) providing access to at least one service and to which there is connected at least one interface (4, 11, 13, 61) at a passenger seat (Si), said interface allowing the passenger to have access to said service,
and/or board connection means (2, 2') arranged for connecting said personal computer equipment item (3) to said on-board network (12) and
the system being **characterized in that** it is arranged in such a way that said interface (4, 11, 13, 61) and said personal computer equipment item (3) interact remotely through transmission of data on said on-board network (12).

2. System according to claim 1, comprising at least one data-entry peripheral (4, 40) at said passenger seat (Si) connected to said on-board network (12) and arranged to interact with said personal computer equipment item (3) through the transmission of data on said on-board network (12).

3. System according to the preceding claim, in which said data-entry peripheral comprises a projector/sensor (40) projecting a virtual keyboard (4) on a flat surface (30).

4. System according to any one of the preceding claims, in which said interface (4, 11, 13, 61) comprises pointer-type means connected to said on-board network (12) and arranged to interact with said personal computer equipment item (3).

5. System according to any one of the preceding claims, in which said at least one interface (4, 11, 13, 61) comprises a display screen (11).

6. System according to any one of the preceding claims, comprising a housing (60) arranged to accommodate and supply said personal computer equipment item (3) with said connection to the on-board network (12).

7. System according to the preceding claim, in which said housing (60) has electrical connection means capable of supplying said personal computer equipment item (3) in accommodation position.

8. System according to any one of the preceding claims, in which said on-board network (12) is a wireless network and said connection means (2, 2') comprise a terminal for wireless connection to said wireless network.

9. Method for accessing to a personal computer equipment item (3) on board of an aircraft comprising an on-board network (12) providing access to at least one service and to which there is connected at least one interface (4, 11, 13, 61) at the passenger seat (Si), said interface allowing the passenger to have access to said service,
the method comprising a step of connecting inside said aircraft, said personal computer equipment item (3) to said on-board network (12),
the method being **characterized in that** it comprises a remote interaction step between said interface (4, 11, 13, 61) and said personal computer equipment (3) through transmission of data on said on-board network (12).

10. Aircraft comprising a system according to any one of claims 1 to 9.

## Patentansprüche

1. System für den Zugang zu einer Personalcomputereinrichtung (3) an Bord eines Flugzeugs, wobei das System ein On-Board-Kommunikationsnetz (12), das den Zugang zu wenigstens einem Dienst anbietet und mit dem wenigstens eine Benutzerschnittstelle (4, 11, 13, 61) im Bereich eines Passagiersitzes (Si) verbunden ist, wobei die Schnittstelle dem Passagier den Zugang zu dem Dienst ermöglicht, sowie
an Bord befindliche Anschlussmittel (2, 2') umfasst, die angeordnet sind, um die Personalcomputereinrichtung (3) mit dem On-Board-Netzwerk (12) zu verbinden, und
wobei das System **dadurch gekennzeichnet ist, dass** es angeordnet ist, so dass die Schnittstelle (4, 11, 13, 61) und die Personalcomputereinrichtung (3) durch die Datenübertragung über das On-Board-Netzwerk (12) ferninteragieren.

2. System nach Anspruch 1, umfassend wenigstens ein Peripheriegerät zur Erfassung (4, 40) im Bereich des Passagiersitzes (Si), das mit dem On-Board-Netzwerk (12) verbunden ist und angeordnet ist, um durch die Datenübertragung über das On-Board-Netzwerk (12) mit der Personalcomputereinrichtung (3) zu interagieren.

3. System nach dem vorhergehenden Anspruch, wobei das Peripheriegerät zur Erfassung einen Projektor/Sensor (40) umfasst, der eine virtuelle Tastatur (4) auf eine ebene Fläche (30) projiziert.

4. System nach einem der vorhergehenden Ansprüche, wobei die Schnittstelle (4, 11, 13, 61) Mittel vom Typ Zeigegerät umfasst, die mit dem On-Board-Netzwerk (12) verbunden sind und angeordnet sind, um mit der Personalcomputereinrichtung (3) zu interagieren.

5. System nach einem der vorhergehenden Ansprüche, wobei die wenigstens eine Schnittstelle (4, 11, 13, 61) einen Anzeigebildschirm (11) umfasst.

6. System nach einem der vorhergehenden Ansprüche, umfassend eine Aufnahme (60), die angeordnet ist, um die Personalcomputereinrichtung (3) aufzunehmen und ihr die Verbindung mit dem On-Board-Netzwerk (12) bereitzustellen.

7. System nach dem vorhergehenden Anspruch, wobei die Aufnahme (60) Stromanschlussmittel aufweist, die geeignet sind, die Personalcomputereinrichtung (3) in der Aufnahmeposition zu versorgen.

8. System nach einem der vorhergehenden Ansprüche, wobei das On-Board-Netzwerk (12) ein Drahtlosnetzwerk ist und die Anschlussmittel (2, 2') einen Anschluss zur drahtlosen Verbindung mit dem Drahtlosnetzwerk umfassen.

9. Verfahren für den Zugang zu einer Personalcomputereinrichtung (3) an Bord eines Flugzeugs, das ein On-Board-Kommunikationsnetz (12) umfasst, welches den Zugang zu wenigstens einem Dienst anbietet und mit dem wenigstens eine Benutzerschnittstelle (4, 11, 13, 61) im Bereich eines Passagiersitzes (Si) verbunden ist, wobei die Schnittstelle dem Passagier den Zugang zu dem Dienst ermöglicht, wobei das Verfahren einen Schritt zum Verbinden -innerhalb des Flugzeugs- der Personalcomputereinrichtung (3) mit dem On-Board-Netzwerk (12) umfasst,
wobei das Verfahren **dadurch gekennzeichnet ist, dass** es einen Schritt zur Ferninteraktion zwischen der Schnittstelle (4, 11, 13, 61) und der Personalcomputereinrichtung (3) durch die Datenübertragung über das On-Board-Netzwerk (12) umfasst.

10. Flugzeug, das ein System nach einem der Ansprüche 1 bis 9 umfasst.
